# EUROPÄISCHE PATENTSCHRIFT

(11) **EP 2 910 969 B1**
(45) Veröffentlichungstag und Bekanntmachung des Hinweises auf die Patenterteilung: **13.04.2016**
(21) Anmeldenummer: 15150727.4
(22) Anmeldetag: 12.01.2015
(51) Int. Cl.: G01S 7/481, G01S 17/42, G01S 7/486

(54) **Optoelektronischer Sensor und Verfahren zur Objekterfassung in einem Überwachungsbereich**
Optoelectronic sensor and method for recording objects in a monitoring area
Capteur optoélectronique et procédé de saisie d'objets dans une zone de surveillance

(30) Priorität: 25.02.2014 DE 102014102420
(43) Veröffentlichungstag der Anmeldung: 26.08.2015
(73) Patentinhaber: SICK AG, 79183 Waldkirch (DE)
(72) Erfinder: Steinkogler, Sascha, Dr., 79106 Freiburg (DE); Ehrler, Carsten, 79111 Freiburg (DE); Hug, Gottfried, 79183 Waldkirch (DE)
(74) Vertreter: Hehl, Ulrich

(56) Entgegenhaltungen:
- WO-A1-2010/149593
- WO-A1-2012/176660
- US-A1- 2008 087 323

## Beschreibung

Die Erfindung betrifft einen optoelektronischen Sensor und ein Verfahren zur Objekterfassung in einem Objektbereich nach dem Oberbegriff von Anspruch 1 beziehungsweise 10.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

In den meisten Fällen und besonders bei der Entfernungsmessung muss der Sensor zwischen Nutzlicht, beispielsweise eines eigenen oder zugeordneten Lichtsenders, und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Um auch geringe Empfangsintensitäten nachweisen zu können, werden herkömmlich in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse.

Lawinenphotodioden im Geigermodus sind nicht nur hochempfindlich, sondern auch vergleichsweise kostengünstig. Zudem lassen sie sich mit wenig Aufwand auf einer Leiterkarte integrieren. Allerdings haben sie eine relativ große Empfangsfläche, die zu einer erhöhten Fremdlichtbelastung über die abbildende Empfangsoptik führt. Herkömmlich eingesetzte Empfangsoptiken haben aber den Nachteil, dass die Fremdlichteinkopplung von der Detektorgröße abhängt. Würde man die Detektorfläche einfach durch eine detektorseitige Blende reduzieren, so wird mit dem Fremdlicht auch das Fernfeldsignal stark unterdrückt. Das wiederum beschränkt die Reichweite des Sensors deutlich. Außerdem kann eine inhomogene Ausleuchtung des Detektors schwer kontrollierbare Messfehler nach sich ziehen.

Aus dem Stand der Technik sind Sensoren mit den unterschiedlichsten Empfangsoptiken bekannt. Beispielsweise zeigt die DE 44 30 778 A1 einen Tubus mit Streurippen, die Störlicht durch Absorption und Mehrfachreflexion unterdrücken. Dadurch wird aber die Abhängigkeit von Detektorfläche und Fremdlichteinwirkung nicht aufgehoben, und der lichtschluckende Tubus ist nicht geeignet, Nutzlicht zu leiten. In der EP 1 715 313 A1 nutzt ein Lichttaster einen Tubus mit einer Blende und einer Linse. Diese Optik dient aber als Sendeoptik und hat die Funktion, die Lichtfarben mehrerer Sender zu durchmischen. Lawinenphotodioden im Geigermodus sind in diesen Dokumenten nicht angesprochen und die Optiken demnach auch nicht für deren Anforderungen ausgelegt.

Die WO 2010/149593 A1 beschreibt einen optischen Entfernungsmesser nach einem Lichtlaufzeitverfahren, der einen Detektor aus Lawinenphotodioden im Geigermodus aufweist. Diesem Detektor ist ein Interferenzfilter und eine Blende vorgeordnet.

Aus der US 2008/0087323 A1 ist ein Konzentrator für eine Photovoltaikanlage bekannt. Eine Fresnellinse fokussiert das einfallende Sonnenlicht in einen Homogenisierer und passiert dabei eine Durchgangsöffnung in einer Schutzplatte für die Solarzellen.

Die WO 2012/176660 A1 offenbart einen weiteren Konzentrator für eine Photovoltaikanlage, in der eine Linse das einfallende Sonnenlicht auf einen Punkt oberhalb eines Homogenisierers fokussiert, der das Sonnenlicht dann der Solarzelle zuführt.

Es ist daher Aufgabe der Erfindung, die Detektion in einem optoelektronischen Sensor mit Lawinenphotodioden im Geiger-Modus zu verbessern.

Diese Aufgabe wird durch einen optoelektronischen Sensor und ein Verfahren zur Objekterfassung in einem Objektbereich nach Anspruch 1 beziehungsweise 10 gelöst. Dabei geht die Erfindung von dem Grundgedanken aus, zumindest den Fremdlichtanteil in der Empfangsoptik zu unterdrücken, der die Empfangsoptik aus dem Nahfeld oder mittleren Entfernungen erreicht. Dazu wird eine Blende zumindest annähernd in der Fernfeldfokalebene eines fokussierenden Elements der Empfangsoptik angeordnet. Das durch die Blende hindurchtretende Licht gelangt dann in die eine Öffnung eines optischen Trichterelements und wird darin zu dessen anderer Öffnung auf der gegenüberliegenden Seite geleitet, wo der Lichtempfänger angeordnet ist. Dadurch wird das Licht aus dem Fernfeld nahezu vollständig erfasst und auf den Lichtempfänger geleitet. Das optische Trichterelement fungiert vorzugsweise gleichzeitig noch als Homogenisierer.

Die Erfindung hat den Vorteil, dass das Fernfeldsignal trotz der großen Detektorfläche und einer drastischen Reduktion der Fremdlichteinkopplung erhalten bleibt. Die Empfangsoptik bietet auch in kurzen und mittleren Entfernungen Vorteile, weil dort die Signaldynamik zumindest einigermaßen konstant gehalten werden kann, statt dort gemäß dem einfachen quadratischen Abstandsgesetz mit zunehmender Nähe zu übersteuern. Die Empfangsoptik beansprucht dennoch relativ wenig Bauraum. Die Detektorfläche wird über den gesamten Abstandsbereich und auch von Fernfeldsignalen, also aus großen Abständen, ohne Signalverlust homogen ausgeleuchtet. Das ist gerade für statistische Signalauswertungsverfahren wichtig, und Lawinenphotodioden im Geigermodus müssen fast zwangsläufig so ausgewertet werden, da Einzelereignisse auch auf Störlichtphotonen zurückgehen könnten. Das ist auch der Grund, warum der Lichtempfänger keinen einzelnen, sondern eine Vielzahl von Lawinenphotodioden aufweist.

Die Lawinenphotodiodenelemente weisen bevorzugt eine Durchbruchspannung von höchstens 70V, insbesondere von höchstens 50V, 30V oder 15V auf. Eine Hochspannungsversorgung wie bei herkömmlich genutzten Lawinenphotodioden kann damit entfallen, und es werden erheblich geringere Herstellkosten möglich.

Die Lawinenphotodiodenelemente sind vorzugsweise in einem CMOS-Prozess hergestellt, insbesondere als Matrixstruktur auf einem gemeinsamen Substrat. Der Lichtempfänger wird somit kostengünstig verfügbar. Ein CMOS-Bauteil ermöglicht unter anderem kleine Strukturen und somit auch eine im Vergleich zu einer herkömmlichen Lawinenphotodiode deutlich herabgesetzte Durchbruchspannung.

Der Lichtempfänger weist bevorzugt auf einem Substrat des Lichtempfängers lokale Auswertungsstrukturen für die Lawinenphotodiodenelemente auf. Die lokalen Auswertungsstrukturen können mit einer Auswertungseinheit außerhalb des Lichtempfängers ergänzt und somit Teilfunktionen auf lokale und externe Auswertungen verteilt werden. Durch die lokale Verarbeitung werden viele Einzeldaten vorgefiltert, so dass nur noch zusammenfassende Messinformationen ausgelesen werden müssen und sich die anfallende Datenmenge ganz erheblich reduziert. Die intrinsische Verstärkung einer Lawinenphotodiode im Geiger-Modus erlaubt dabei eine direkte digitale Implementierung der Auswertungsschaltungen.

Das fokussierende Element weist bevorzugt eine asphärische Linse oder ein Linsensystem auf. Dadurch wird eine besonders effektive Fokussierung aus dem Fernfeld auf die Blende erreicht. Alternativ wird eine einfache sphärische Linse eingesetzt.

Das optische Trichterelement weist bevorzugt an seinen Innenflächen eine Verspiegelung auf. Dadurch wird das Licht in dem Trichterelement noch besser geführt und homogenisiert.

Das optische Trichterelement ist bevorzugt pyramidenstumpfförmig ausgebildet. Es kann so leicht hergestellt werden und besitzt definierte Spiegelflächen mit gezielt lichtführenden Eigenschaften. Obwohl die Grundfläche vorzugsweise ein Quadrat ist, kann wahlweise auch ein Dreieck, ein Hexagon oder eine andere Grundfläche vorgesehen sein.

Das optische Trichterelement weist bevorzugt mindestens eine sprungartige Verjüngung des Querschnitts auf. Damit sind die Wände des optischen Trichterelements keine glatten geneigten Wände mit kontinuierlicher Verjüngung, sondern bilden eine Treppe mit stufenweiser Verjüngung. Hierdurch werden flachere Spiegelwinkel bei gleichzeitig stärkerer Verjüngung in einem kürzeren Trichter ermöglicht. Alternativ sind eine kontinuierliche Verjüngung, schlauchförmiger Verlauf mit gleichem Querschnitt oder eine diskret oder kontinuierlich zunehmende Querschnittsfläche denkbar.

Das optische Trichterelement ist bevorzugt unmittelbar nach der Blende und/oder unmittelbar vor dem Lichtempfänger angeordnet. Es gibt demnach so gut wie keine Abstände zwischen Blende, optischem Trichterelement und Lichtempfänger, das optische Trichterelement füllt den gesamten Bereich zwischen Blende und Lichtempfänger. Damit wird die Baulänge der Empfangsoptik verringert, und es wird ausgeschlossen, dass innerhalb der Empfangsoptik noch Fremdlicht eingefangen wird.

Zwischen der Blende und dem optischen Trichterelement ist bevorzugt ein Diffusorelement angeordnet. Dies ermöglicht eine Verkürzung des optischen Trichterelements, da der Lichtweg von der Blende zur Trichterwand durch die größeren Ablenkwinkel nach dem Diffusor verkürzt ist. Außerdem wird die Homogenisierung erheblich verbessert. Das Diffusorelement ist vorzugsweise lückenlos zwischen Blende und optischem Trichterelement eingesetzt.

Der Lichtempfänger weist bevorzugt eine Fläche von einigen Quadratmillimetern auf. Eine Fläche in der Größenordnung von Quadratmillimetern ist im Vergleich zu einer einfachen Photodiode viel, wird aber für die Vielzahl von Lawinenphotodiodenelementen im Geigermodus in einem erfindungsgemäß eingesetzten Lichtempfänger benötigt. Deshalb würde mit einer herkömmlichen Empfangsoptik gerade bei Detektionen aus großen Abständen das Nutzsignal von sehr viel Fremdlicht gestört, das durch die Erfindung unterdrückt wird.

Das Flächenverhältnis von Blende zu Lichtempfänger ist dabei vorzugsweise sehr klein und beträgt beispielsweise höchstens 1:10, 1:100 oder 1:1000. Dieses Flächenverhältnis bestimmt nämlich, in welchem Maße Fremdlicht im Fernfeld unterdrückt werden kann.

Der Sensor ist bevorzugt ein entfernungsmessender Sensor mit einem Lichtsender zum Aussenden von Lichtpulsen und einer Lichtlaufzeitmesseinheit, um eine Lichtlaufzeit zwischen dem Sendezeitpunkt eines ausgesandten Lichtpulses und einem Empfangszeitpunkt des von einem Lawinenphotodiodenelement aus dem Überwachungsbereich empfangenen Lichtpulses zu messen. Dieser Sensor empfängt also das im Überwachungsbereich reflektierte oder remittierte eigene Sendelicht und erreicht durch die erfindungsgemäße Empfangsoptik eine besonders große Reichweite. In vorteilhafter Weiterbildung zu einem Laserscanner wird die Entfernung nicht nur in einer Richtung gemessen, sondern die Lichtpulse tasten mit Hilfe einer beweglichen Ablenkeinheit, wie eines Drehspiegels, oder durch Bewegen beziehungsweise Rotieren eines Messkopfes eine Ebene oder sogar einen dreidimensionalen Raumbereich ab.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung eines optoelektronischen Sensors;
- Fig. 2: ein beispielhaftes vereinfachtes Ersatzschaltbild einer in dem Lichtempfänger des Sensors gemäß Figur 1 eingesetzten Lawinenphotodiode im Geiger-Modus;
- Fig. 3a: eine schematische Darstellung von Aufbau und Strahlengang der Empfangsoptik des Sensors gemäß Figur 1;
- Fig. 3b: eine Ausschnittvergrößerung der Figur 3a;
- Fig. 3c: eine beispielhafte Lichtverteilung des durch die Empfangsoptik gemäß Figur 3a geführten Empfangslichts auf dem Lichtempfänger; und
- Fig. 4: eine beispielhafte Darstellung der abstandsabhängigen Signaldynamik einer erfindungsgemäßen Empfangsoptik.

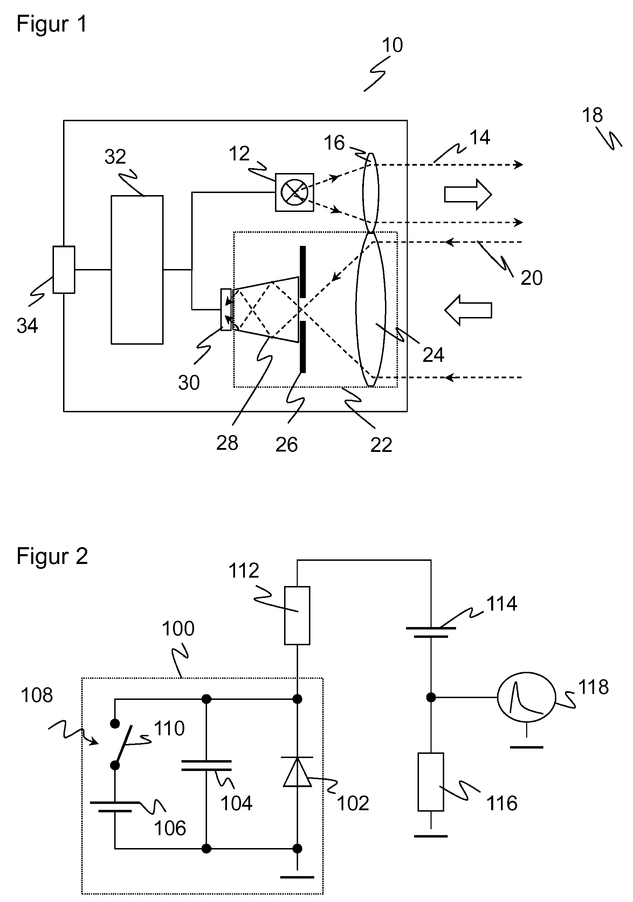

Figur 1 zeigt eine Blockdarstellung eines optoelektronischen Sensors 10, der beispielhaft als Lichttaster ausgebildet ist. Der Sensor 10 weist einen Lichtsender 12 auf, beispielsweise eine Laserdiode, deren Sendelicht 14 in einer Sendeoptik 16 kollimiert und dann in einen Überwachungsbereich 18 abgelenkt wird. Das an Objekten in dem Überwachungsbereich 18 remittierte Licht wird als Empfangslicht 20 durch eine Empfangsoptik 22, die eine Linse 24, eine Blende 26 und ein optisches Trichterelement 28 aufweist, auf einen Lichtempfänger 30 mit einer Vielzahl von in Pixeln angeordneten Lichtempfangselementen in Form von Lawinenphotodioden geleitet.

In dem Sensor 10 ist weiterhin eine Steuer- und Auswertungseinheit 32 vorgesehen, die mit dem Lichtsender 12 und dem Lichtempfänger 30 verbunden ist. Die Steuer- und Auswertungseinheit 32 erfasst anhand des Empfangssignals des Lichtempfängers 30 Objekte in dem Überwachungsbereich 18. Dabei wird in einer Ausführungsform des Sensors 10 als entfernungsmessender Lichttaster durch Aussenden von Lichtpulsen und Bestimmen der Lichtlaufzeit bis zu deren Empfang auch der Abstand der erfassten Objekte gemessen. Über einen Ausgang 34 kann die Auswertungseinheit 32 verarbeitete oder rohe Sensormessdaten ausgeben, beziehungsweise umgekehrt Steuer- und Parametrieranweisungen entgegennehmen.

Die Lichtempfangselemente des Lichtempfängers 30 sind Lawinenphotodioden, die zur hochempfindlichen Erfassung von Empfangslicht 20 im Geiger-Modus betrieben werden. Zur Erläuterung zeigt Figur 2 ein beispielhaftes vereinfachtes Ersatzschaltbild einer derartigen Lawinenphotodiode. In der Praxis handelt es sich um ein Halbleiterbauteil, dessen nicht dargestellter Aufbau hier als bekannt vorausgesetzt wird. Die Lawinenphotodiode 100 zeigt zum einen das Verhalten einer Diode 102. Sie hat eine Kapazität, die durch einen parallel geschalteten Kondensator 104 repräsentiert wird. Der mögliche Lawinendurchbruch erzeugt Ladungsträger, deren Ursprung in dem Ersatzschaltbild als Stromquelle 106 dargestellt wird. Der Lawinendurchbruch wird durch ein auftreffendes Photon 108 ausgelöst, wobei dieser Vorgang wie ein Schalter 110 wirkt. Nach außen ist die Lawinenphotodiode über einen Widerstand 112 mit einer Stromquelle 114 verbunden. Zwischen dieser Stromquelle und einem weiteren Widerstand 116 kann an einem Punkt 118 das Ausgangssignal betrachtet werden.

Im Bereitschaftszustand liegt über der Diode 102 eine Spannung oberhalb der Durchbruchspannung an. Erzeugt dann ein einfallendes Photon 108 ein Ladungsträgerpaar, so schließt dies gleichsam den Schalter 110, so dass die Lawinenphotodiode über die Stromquelle 106 mit Ladungsträgern geflutet wird. Neue Ladungsträger entstehen aber nur, solange das elektrische Feld stark genug bleibt. Wird durch die Stromquelle 106 der Kondensator 104 so weit entladen, dass die Durchbruchspannung unterschritten ist, so kommt die Lawine von selbst zum Erliegen ("passive quenching"). Danach wird der Kondensator 104 von der äußeren Stromquelle 114 über den Widerstand 112 wieder aufgeladen, bis wieder eine Spannung über der Durchbruchspannung an der Diode 102 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal am Punkt 118 rapide und unabhängig von der Intensität des auslösenden Lichts, hier eines Photons 108, auf einen Maximalwert an und fällt dann nach dem Löschen der Lawine wieder ab. Die Pulsform ist am Punkt 118 angedeutet. Die Zeitkonstante des Abfalls, welche eine Totzeit der Lawinenphotodiode 100 angibt, bestimmt sich aus der Kapazität des Kondensators 104 und dem Widerstand 112 und liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor liegt typischerweise in einer Größenordnung von 10^5 bis 10^7 und ergibt sich im Wesentlichen aus der maximalen Anzahl von Ladungsträgern, die von der Lawine in der Lawinenphotodiode 100 rekrutiert werden können.

Fällt das zu messende Ereignis in die Totzeit, so ist die Lawinenphotodiode 100 weitgehend blind. Die Lawinenphotodiode 100 reagiert auch auf jedes Einzelereignis mit dem gleichen Signal, das Abwarten einer ausreichenden Totzeit und Auslösen eines Ladungsträgerpaares vorausgesetzt. Allein ist eine Lawinenphotodiode 100 deshalb weitgehend ungeeignet, um eine Empfangsintensität zu bewerten. Außerdem kann ein einzelnes Photon des Umgebungslichts oder ein einziges Ladungsträgerpaar aufgrund von Dunkelrauschen genügen, um eine Lawine auszulösen, die nichts mit dem zu messenden Ereignis zu tun hat. Auf dem Lichtempfänger 28 ist deshalb eine Vielzahl von einzelnen Lawinenphotodiodenelementen 100 vorgesehen, deren Signale von der Steuer- und Auswertungseinheit 32 gemeinsam ausgewertet werden. Ein entsprechendes Bauelement kann beispielsweise in einem CMOS-Prozess hergestellt werden. Die Durchbruchspannung der Lawinenphotodiodenelemente 100 ist deutlich geringer als bei herkömmlichen Lawinenphotodioden und beträgt beispielsweise höchstens 70V oder sogar nur 15V-30V.

Die anhand der Figur 1 beschriebene Ausführungsform des Sensors 10 ist nur beispielhaft zu verstehen. Lichtempfänger auf Basis von Lawinenphotodioden im Geigermodus können in einer großen Familie von optoelektronischen Sensoren eingesetzt werden, beispielsweise Lichtschranken, Entfernungstastern oder Laserscannern. Diese Sensoren 10 können in ihrem Aufbau erheblich von Figur 1 abweichen, beispielsweise Sende- und Empfangskanal über einen gemeinsamen Teilerspiegel führen oder passiv arbeiten und damit gänzlich auf einen Sendekanal verzichten. Die Erfindung betrifft die Empfangsoptik 24, die im Folgenden weiter erläutert wird, und weniger den sonstigen Aufbau des Sensors 10.

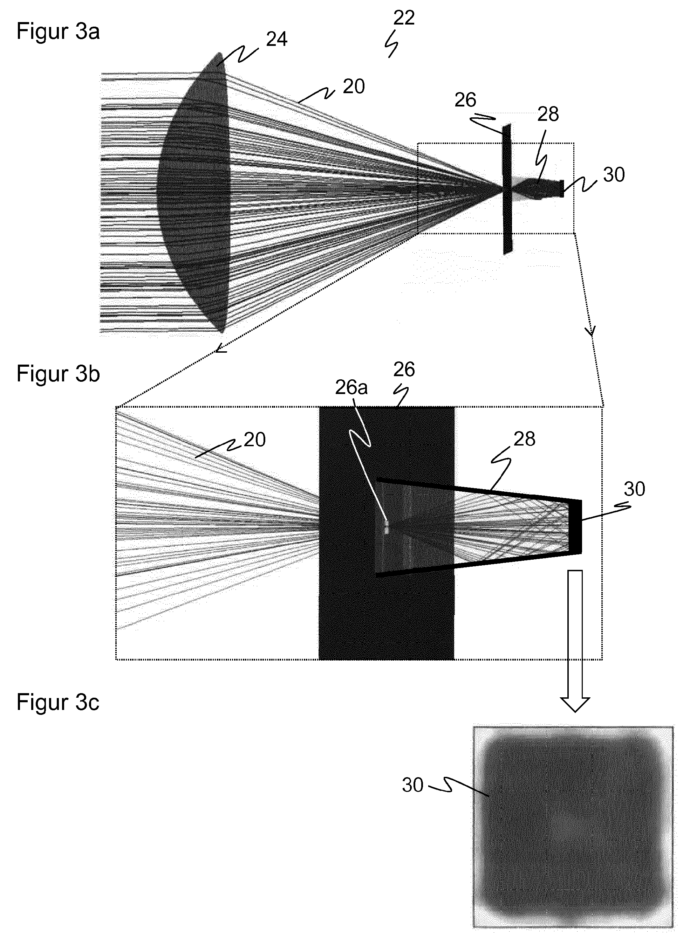

Figur 3 zeigt den Aufbau der Empfangsoptik 22 und den Strahlengang des Empfangslichts 20 in der Empfangsoptik 22. Dabei ist Figur 3a eine Gesamtdarstellung der Empfangsoptik 22 und Figur 3b eine Ausschnittvergrößerung im Bereich der Blende 26 und des optischen Trichterelements 28, während Figur 3c eine beispielhafte resultierende Lichtverteilung auf dem hier in der Draufsicht gezeigten Lichtempfänger 30 illustriert.

Die Linse 24 ist eine Sammellinse, die sphärisch, asphärisch oder als Freiform gestaltet sein kann. Abweichend von den Figuren ist auch denkbar, als fokussierendes Element statt der Linse 24 reflexive oder katadioptrische Elemente einzusetzen. Die Blende 26 wird zumindest in der Nähe der Fernfeldfokalebene der Linse 24 angeordnet. Das optische Trichterelement 28 ist beispielsweise ein hohler Pyramidenstumpf mit verspiegelten Innenflächen und quadratischem Querschnitt. Alternative Geometrien basieren auf einer sechseckigen oder beliebigen anderen polygonalen Grundfläche. Der Trichterquerschnitt kann sich von der Blende 26 zu dem Lichtempfänger 30 kontinuierlich oder diskret verjüngen. Blende 26 und optisches Trichterelement 28 können auch asymmetrisch gestaltet werden, beispielsweise für biaxiale Systeme.

Das optische Trichterelement 28 hat die Funktion, das Empfangslicht 20 hinter der Fokalebene der Linse 24 auf den Lichtempfänger 30 zu lenken und dessen homogene Ausleuchtung zu gewährleisten, ohne dabei Lichtsignal zu verlieren. Figur 3c zeigt das Ergebnis einer Simulation, wonach die Homogenität auf der Oberfläche des Lichtempfängers 30 sehr gut erreicht wird. Die Geometrie des optischen Trichterelements 28 und insbesondere dessen Länge sollte so gestaltet sein, dass mindestens eine Reflexion des Empfangslichts 20 an dessen Innenflächen stattfinden kann. Zumindest bei Einsatz in einem entfernungsmessenden System nach dem Lichtlaufzeitprinzip sollte andererseits die Länge und Schräge der Innenflächen des optischen Trichterelements zwar die Homogenisierung gewährleisten, jedoch die Anzahl der Reflexionen so weit begrenzen, dass sowohl die Reflexionsverluste als auch die Verlängerung der Lichtwege durch die Reflexionen nicht signifikant wird. Übersteigt die Anzahl der Reflexionen ein bestimmtes Maß, könnte sonst die reflexionsbedingte optische Wegverlängerung die gemessenen Abstandswerte verfälschen.

Um die homogenisierende Wirkung des optischen Trichterelements 28 zu verstärken beziehungsweise um dessen Baulänge zu verkürzen, kann zwischen Blende 26 und optischem Trichterelement 28 ein zusätzliches, nicht dargestelltes Diffusorelement angeordnet werden.

Für die Effizienz der Fremdlichtunterdrückung in der Empfangsoptik 22 ist das Flächenverhältnis von Blendenöffnung 26a der Blende 26 und Lichtempfänger 30 entscheidend. Sicherlich sollte die Blendenöffnung 26a kleiner sein als der Lichtempfänger 30, damit die Fremdlichteinkopplung durch die kleinere Blende 26 und nicht durch die größere Fläche des Lichtempfängers 30 beschränkt wird. Die Fremdlichtunterdrückung ist dabei proportional zum Flächenverhältnis von Blendenöffnung 26a und Lichtempfänger 30. Hat beispielsweise die Blendenöffnung eine Größe von 0,1 x 0,1 mm² und der Lichtempfänger 30 eine Fläche von 1 x 1 mm², so beträgt dieses Flächenverhältnis 1:100, und dementsprechend kann das Fremdlicht um einen Faktor 100 unterdrückt werden. Dabei sollte gleichzeitig darauf geachtet werden, dass die Fernfeldabbildung des von dem Sendelicht 14 in dem Überwachungsbereich 18 erzeugten Lichtflecks auf der Blende 26 kleiner ist als die Blendenöffnung 26a, damit der Signalpegel des Nutzsignals nicht beeinträchtigt wird. Eine optimale Fokussierung kann durch geeignete Wahl oder geeignetes Design der Linse 24 etwa als asphärische Linse erreicht werden.

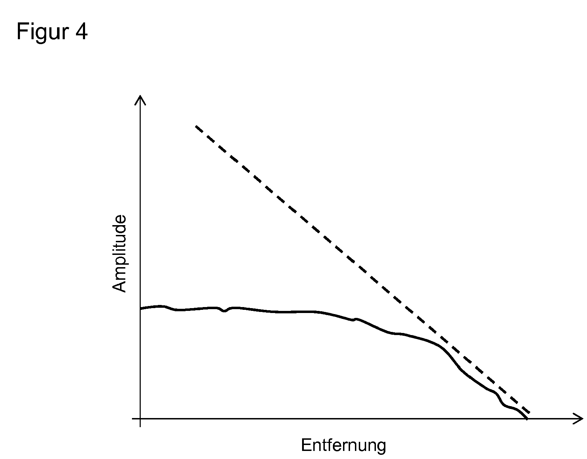

Figur 4 zeigt eine beispielhafte Darstellung der abstandsabhängigen Signaldynamik der Empfangsoptik 22, also die hier doppelt logarithmisch aufgetragene Abstandabhängigkeit der Amplitude des Empfangssignals. Mit gestrichelter Linie wurde zum Vergleich die rein abstandsbedingte Signaldynamik aufgetragen. Erkennbar fordert das erfindungsgemäße Optikkonzept im Fernfeld keine Signalverluste. Für mittlere und kurze Entfernungen ist die Signaldynamik erheblich reduziert. Das ist aber in der Praxis ein Vorteil, weil in solchen Distanzen weit unterhalb der spezifizierten Reichweite des Sensors 10 ein ausreichendes Signal fast immer gegeben ist und im Gegenteil Übersteuerungen problematisch werden, die durch den flachen Verlauf der erfindungsgemäßen Empfangsoptik 22 vermieden werden.

## Patentansprüche

1. Optoelektronischer Sensor (10) mit einem Lichtempfänger (30), der eine Vielzahl von Lawinenphotodiodenelementen zur Erfassung von Empfangslicht (20) aus einem Überwachungsbereich (18) aufweist, die jeweils mit einer Vorspannung oberhalb einer Durchbruchspannung vorgespannt und somit in einem Geiger-Modus betrieben sind sowie mit einer dem Lichtempfänger (30) vorgeordneten Empfangsoptik (22), die ein fokussierendes Element (24) und eine Blende (26) aufweist,
**dadurch gekennzeichnet,**
**dass** die Blende (26) in der Fernfeldfokalebene des fokussierenden Elements (24) angeordnet ist, dass das Flächenverhältnis von Blendenöffnung zu Lichtempfänger (30) höchstens 1:10 beträgt und dass die Empfangsoptik (22) ferner ein optisches Trichterelement (28) aufweist, das zwischen der Blende (26) und dem Lichtempfänger (30) angeordnet ist.

2. Sensor (10) nach Anspruch 1,
wobei das fokussierende Element (24) eine asphärische Linse oder ein Linsensystem aufweist.

3. Sensor (10) nach Anspruch 1 oder 2,
wobei das optische Trichterelement (28) an seinen Innenflächen eine Verspiegelung aufweist.

4. Sensor (10) nach einem der vorhergehenden Ansprüche,
wobei das optische Trichterelement (28) pyramidenstumpfförmig ausgebildet ist.

5. Sensor (10) nach einem der vorhergehenden Ansprüche,
wobei das optische Trichterelement (28) mindestens eine sprungartige Verjüngung des Querschnitts aufweist.

6. Sensor (10) nach einem der vorhergehenden Ansprüche,
wobei das optische Trichterelement (28) unmittelbar nach der Blende (26) und/oder unmittelbar vor dem Lichtempfänger (30) angeordnet ist.

7. Sensor (10) nach einem der vorhergehenden Ansprüche,
wobei zwischen der Blende (26) und dem optischen Trichterelement (28) ein Diffusorelement angeordnet ist.

8. Sensor (10) nach einem der vorhergehenden Ansprüche,
wobei der Lichtempfänger (30) eine Fläche von einigen Quadratmillimetern aufweist und/oder das Flächenverhältnis von Blendenöffnung zu Lichtempfänger (30) höchstens 1:100 oder 1:1000 beträgt.

9. Sensor (10) nach einem der vorhergehenden Ansprüche,
der ein entfernungsmessender Sensor, insbesondere Laserscanner, mit einem Lichtsender (12) zum Aussenden von Lichtpulsen und einer Lichtlaufzeitmesseinheit (32) ist, um eine Lichtlaufzeit zwischen dem Sendezeitpunkt eines ausgesandten Lichtpulses und einem Empfangszeitpunkt des von einem Lawinenphotodiodenelement aus dem Überwachungsbereich (18) empfangenen Lichtpulses zu messen.

10. Verfahren zur Objekterfassung in einem Überwachungsbereich (18) mit einem Lichtempfänger (30), der eine Vielzahl von Lawinenphotodiodenelementen aufweist, die jeweils mit einer Vorspannung oberhalb einer Durchbruchspannung vorgespannt und somit in einem Geiger-Modus betrieben werden, wobei Empfangslicht (20) aus dem Überwachungsbereich (18) durch eine dem Lichtempfänger (30) vorgeordnete Empfangsoptik (22) auf den Lichtempfänger (30) geführt und dabei von einem fokussierenden Element (24) auf eine Blende (26) fokussiert wird,
**dadurch gekennzeichnet,**
**dass** das Empfangslicht (20) von dem fokussierenden Element (24) in dessen Fernfeldfokalebene auf die Blende (26) fokussiert wird, wobei das Flächenverhältnis der Blendenöffnung
zu dem Lichtempfänger (30) höchstens 1:10 beträgt, und anschließend durch ein optisches Trichterelement (28) auf den Lichtempfänger (30) geführt wird.

## Claims

1. An optoelectronic sensor (10) having a light receiver (30) comprising a plurality of avalanche photo diode elements for the detection of reception light (20) from a monitoring area (18) which are each biased with a bias voltage above a breakthrough voltage and are thus operated in a Geiger mode, and having reception optics (22) arranged in front of the light receiver (30) comprising a focusing element (24) and an aperture (26),
**characterized in that** the aperture (26) is arranged in a far field focal plane of the focusing element (24), **in that** the area ratio of aperture and light receiver (30) is at most 1/10 and **in that** the reception optics (22) comprises an optical funnel element (28) which is arranged between the aperture (26) and the light receiver (30).

2. The sensor (10) according to claim 1,
wherein the focusing element (24) comprises an aspheric lens or a lens system.

3. The sensor (10) according to claim 1 or 2,
wherein the optical funnel element (28) comprises a reflective inner surface.

4. The sensor (10) according to any of the preceding claims,
wherein the optical funnel element (28) is formed as a frustum of a pyramid.

5. The sensor (10) according to any of the preceding claims,
wherein the optical funnel element (28) comprises at least one discontinuous tapering of the cross section.

6. The sensor (10) according to any of the preceding claims,
wherein the optical funnel element (28) is arranged immediately behind the aperture (26) and/or immediately in front of the light receiver (30).

7. The sensor (10) according to any of the preceding claims,
wherein a diffusor element is arranged between the aperture (26) and the optical funnel element (28).

8. The sensor (10) according to any of the preceding claims,
wherein the light receiver has an area of some square millimeters and/or the ratio of aperture and light receiver (30) is at most 1/100 or 1/1000.

9. The sensor (10) according to any of the preceding claims,
which is a distance-measuring sensor, in particular a laser scanner, having a light transmitter (12) for transmitting light pulses and a light time of flight measuring unit (32) for measuring a light time of flight between the transmission point in time of a transmitted light pulse and a reception point in time of the received light pulse received by an avalanche photo diode element from the monitoring area (18).

10. A method for the detection of objects in a monitoring area (18) with a light receiver (30) comprising a plurality of avalanche photo diode elements which are each biased with a bias voltage above a breakthrough voltage and are thus operated in a Geiger mode, wherein reception light (20) from the monitoring area (18) is guided onto the light receiver (30) through reception optics (22) arranged in front of the light receiver (30) and thereby focused onto an aperture (26) by a focusing element (24),
**characterized in that** the reception light (20) is focused onto the aperture (26) by the focusing element (24) in its far field focal plane, wherein the area ratio of aperture and light receiver (30) is at most 1/10, and wherein the reception light (20) subsequently is guided through an optical funnel element (28) onto the light receiver (30).

## Revendications

1. Capteur optoélectronique (10) avec un récepteur de lumière (30), qui comprend une pluralité d'éléments de photodiodes à avalanche pour la détection de lumière reçue (20) provenant d'une zone de surveillance (18), qui sont respectivement soumises à une tension préalable au-dessous d'une tension de claquage et fonctionnent donc dans un mode dit "Geiger", et avec une optique de réception (22) agencée avant le récepteur de lumière (30), qui comprend un élément de focalisation (24) et un diaphragme (26),
**caractérisé en ce que**
le diaphragme (26) est agencé dans le plan focal lointain de l'élément de focalisation (24),
**en ce que** le rapport de surface de l'ouverture du diaphragme sur le récepteur de lumière (30) est au maximum de 1:10, et
**en ce que** l'optique de réception (22) comprend en outre un élément optique en entonnoir (28), qui est agencé entre le diaphragme (26) et le récepteur de lumière (30).

2. Capteur (10) selon la revendication 1,
dans lequel l'élément de focalisation (24) comprend une lentille ou un système de lentilles asphérique.

3. Capteur selon la revendication 1 ou 2,
dans lequel l'élément optique en entonnoir (28) présente un revêtement miroir sur ses surfaces intérieures.

4. Capteur (10) selon l'une des revendications précédentes,
dans lequel l'élément optique en entonnoir (28) est réalisé en forme de tronc de pyramide.

5. Capteur (10) selon l'une des revendications précédentes,
dans lequel l'élément optique en entonnoir (28) présente une section transversale avec au moins un rétrécissement brusque.

6. Capteur (10) selon l'une des revendications précédentes,
dans lequel l'élément optique en entonnoir (28) est agencé immédiatement après le diaphragme (26) et/ou immédiatement avant le récepteur de lumière (30).

7. Capteur (10) selon l'une des revendications précédentes,
dans lequel un élément diffuseur est agencé entre le diaphragme (26) et l'élément optique en entonnoir (28).

8. Capteur (10) selon l'une des revendications précédentes,
dans lequel le récepteur de lumière (30) présente une surface de quelques millimètres carrés et/ou le rapport de surface de l'ouverture du diaphragme sur le récepteur de lumière (30) est au maximum de 1:100 ou 1:1000.

9. Capteur (10) selon l'une des revendications précédentes,
qui est un capteur destiné à la mesure de distance, en particulier un scanner à laser, avec un émetteur de lumière (12) pour émettre des impulsions de lumière et une unité de mesure du temps de parcours de lumière (32) afin de mesurer un temps de parcours de la lumière entre l'instant d'émission d'une impulsion de lumière émise et un instant de réception de l'impulsion de lumière reçue par un élément de photodiode à avalanche en provenance de la zone de surveillance (18).

10. Procédé pour la détection d'objets dans une zone de surveillance (18) avec un récepteur de lumière (30) qui comprend une pluralité d'éléments de photodiode à avalanche, qui sont respectivement soumises à une tension préliminaire au-dessus d'une tension de claquage et fonctionnent donc dans un mode dit "Geiger", dans lequel la lumière de réception (20) provenant de la zone de surveillance (18) est guidée par une optique de réception (22) agencée avant le récepteur de lumière (30) vers le récepteur de lumière (30) et est ici focalisée par un élément de focalisation (24) sur un diaphragme (26),
**caractérisé en ce que**
la lumière reçue (20) est focalisée par l'élément de focalisation (24) dans son plan focal lointain vers le diaphragme (26), et le rapport de surface de l'ouverture du diaphragme sur le récepteur de lumière (30) est au maximum de 1:10, et est enfin guidée par un élément optique en entonnoir (26) vers le récepteur de lumière (30).
